(19) Europäisches Patentamt
European Patent Office
Office européen des brevets

(11) EP 3 937 277 A1

(12) **EUROPEAN PATENT APPLICATION**
published in accordance with Art. 153(4) EPC

(43) Date of publication:
**12.01.2022 Bulletin 2022/02**

(21) Application number: **20765743.8**

(22) Date of filing: **04.03.2020**

(51) Int Cl.:
***H01M 4/13** (2010.01)* ***H01M 4/133** (2010.01)*
***H01M 4/134** (2010.01)* ***H01M 4/62** (2006.01)*
***H01G 11/38** (2013.01)*

(86) International application number:
**PCT/JP2020/009216**

(87) International publication number:
**WO 2020/179830 (10.09.2020 Gazette 2020/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.03.2019 JP 2019038912**

(71) Applicants:
- **Osaka University**
**Suita-shi, Osaka 565-0871 (JP)**
- **DAIKIN INDUSTRIES, LTD.**
**Osaka-shi, Osaka 530-8323 (JP)**

(72) Inventors:
- **HARADA, Akira**
**Suita-shi, Osaka 565-0871 (JP)**
- **YAMAGUCHI, Hiroyasu**
**Suita-shi, Osaka 565-0871 (JP)**
- **TAKASHIMA, Yoshinori**
**Suita-shi, Osaka 565-0871 (JP)**
- **HIRAGA, Kentarou**
**Osaka-shi, Osaka 530-8323 (JP)**
- **YAMAZAKI, Shigeaki**
**Osaka-shi, Osaka 530-8323 (JP)**
- **YAMAGUCHI, Fumihiko**
**Osaka-shi, Osaka 530-8323 (JP)**
- **SUGIYAMA, Akinari**
**Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **BINDER FOR ELECTROCHEMICAL DEVICES, ELECTRODE MIXTURE, ELECTRODE, ELECTROCHEMICAL DEVICE AND SECONDARY BATTERY**

(57) Provided are a binder for an electrochemical device made of a polymer material that has excellent elongation and can suppress a volume change of an electrode structure, and an electrode mixture, an electrode, an electrochemical device, and a secondary battery that comprise the same.

A binder for an electrochemical device, comprising a polymer material including:
a first polymer containing a first constituent unit having a guest group in a side chain; and a second polymer containing a second constituent unit having a host group in a side chain.

EP 3 937 277 A1

## Description

### Technical Field

The present disclosure relates to a binder for an electrochemical device, an electrode mixture, an electrode, an electrochemical device, and a secondary battery.

### Background Art

In recent years, an electronic device such as a cellphone, a mobile personal computer, or a digital camera has rapidly become widespread, and the demand for an electrochemical device such as a small secondary battery has increased rapidly. Further, these devices have had higher performance and have been given an unprecedented function, and because of this, there is an increasing need for an electrochemical device that can withstand use under harsh conditions for a longer period of time.

Examples of the secondary battery include a lead battery, a NiCd battery, a nickel hydrogen battery, and a lithium battery, and in particular, a lithium battery has a high density per unit volume and weight, and the output thereof can be increased, and thus the demand therefor has increased rapidly.

These secondary batteries usually include a positive electrode and a negative electrode that are composed of a positive electrode or negative electrode active material, a binder, and a current collector, and the positive electrode and the negative electrode are separated from each other by a separator so as not to cause an electrical short circuit. The positive electrode, the negative electrode, and the separator are porous and are present in the state of being impregnated with an electrolytic solution.

Patent Literature 1 discloses a binder for a lithium battery, made of polyacrylic acid crosslinked with a specific cross-linking agent, for a lithium battery using silicon as an active material.

Patent Literature 2 discloses an electrode for a battery, having a current collector and a negative electrode active material layer which is formed on the surface of the current collector and contains a negative electrode active material and a polyacrylic acid as a binder.

Patent Literatures 3 to 5 disclose a polymer material having a host group and/or a guest group and having excellent elongation.

### Citation List

### Patent Literature

Patent Literature 1: International Publication No. 2014/065407
Patent Literature 2: Japanese Patent Laid-Open No. 2009-80971
Patent Literature 3: International Publication No. 2018/038186
Patent Literature 4: International Publication No. 2013/162019
Patent Literature 5: International Publication No. 2012/036069

### Summary of Invention

### Technical Problem

The present disclosure provides a binder for an electrochemical device which can reduce the resistance and the amount of gas generated of the electrochemical device and improve the capacity retention, and an electrode mixture, an electrode, an electrochemical device, and a secondary battery that comprise the same.

### Solution to Problem

The present disclosure relates to a binder for an electrochemical device, comprising a polymer material including a first polymer containing a first constituent unit having a guest group in a side chain and a second polymer containing a second constituent unit having a host group in a side chain.

At least one of the first polymer and the second polymer preferably has one or more fluorine groups.

The present disclosure is also a binder for an electrochemical device, comprising a polymer material including a third polymer containing a first constituent unit having a guest group in a side chain, a second constituent unit having

a host group in a side chain, and a third constituent unit other than the first constituent unit and the second constituent unit.

At least one constituent unit of the first constituent unit, the second constituent unit, and the third constituent unit preferably has one or more fluorine groups.

The guest group is preferably a hydrocarbon group.

The number of carbon atoms of the guest group is preferably 40 or less.

The number of carbon atoms of the guest group is preferably 3 to 20.

The guest group preferably has one or more fluorine groups.

The first constituent unit is preferably a structure represented by the following formula (1a):

[Formula 1]

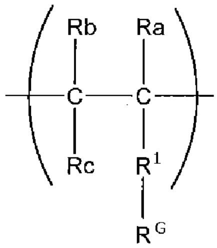

(1a)

wherein

Ra represents a hydrogen atom, a methyl group, or a fluorine group; Rb represents a hydrogen atom or a fluorine group; Rc represents a hydrogen atom or a fluorine group;
$R^1$ represents a divalent group formed by removing one hydrogen atom from a monovalent group selected from the group consisting of a hydroxy group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, a phenyl group optionally having one or more substituents, an aldehyde group, and a carboxy group, and/or a group represented by $-O-(CH_2-CH_2-O)n-$ (n is 1 to 20); and
$R^G$ represents a guest group, and/or
a structure represented by the following formula (1'a):

[Formula 2]

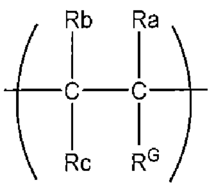

(1'a)

wherein
Ra, Rb, Rc, and $R^G$ are as defined in the formula (1a).

The host group is preferably a cyclodextrin or a derivative thereof.

Preferably, the host group is a group in which a methylene group is bonded to an oxygen atom derived from a hydroxyl group of a cyclodextrin or a derivative thereof, and
the methylene group is further bonded to the main chain or a side chain of the second constituent unit.

The total number of fluorine groups contained in the first constituent unit and the second constituent unit is preferably 4 or more.

The present disclosure is also an electrode mixture comprising the binder for an electrochemical device described above, an electrode active material, and water or a non-aqueous solvent.

The present disclosure is also an electrode comprising the binder for an electrochemical device described above, an electrode active material, an electrolytic solution, and a current collector.

The electrode may be a positive electrode.

The electrode may be a negative electrode.

The electrode active material may contain a carbonaceous material in at least a part thereof.
The electrode active material may contain a silicon-containing compound in at least a part thereof.
The present disclosure is also an electrochemical device comprising the electrode described above.
The present disclosure is also a secondary battery comprising the electrode described above.
The secondary battery is preferably a lithium ion battery.

Advantageous Effects of Invention

The present disclosure can provide a binder for an electrochemical device which can reduce the resistance and the amount of gas generated of an electrochemical device and improve the capacity retention, and an electrode mixture, an electrode, an electrochemical device, and a secondary battery that comprise the same.

Description of Embodiments

Hereinafter, the present disclosure will be described in detail.
An electrochemical device converts electrical energy and chemical energy by exchanging an electron or an ion between electrodes, and generally includes a condenser, a capacitor, and a battery. An electron or a metal ion moves between the electrodes, and at this time, the metal ion is inserted into or removed from the active material contained in the electrodes. The insertion and removal of the metal ion causes a rapid volume change of the active material, and a defect such as a crack is likely to occur on the surface of a primary particle of the active material. Particularly in a high-capacity secondary battery, when a large amount of a metal ion moves in order to increase the output, the volume change becomes very large. Further, if the battery is discharged and charged for a long period of time, there is a problem that the active material is pulverized and the life of the battery is finally shortened.
From these viewpoints, the development of an active material and a binder that can suppress or follow the volume change due to discharge and charge has been required for the development of a long-life electrochemical device .
The role of the conventional binder is to bind an active material and a current collector at an electrode to form a strong electrode plate and assist an inherent characteristic of the active material. The binder for an electrochemical device according to the present disclosure has the performance as the conventional binder and has unprecedented excellent elongation, and thereby can follow the volume change of the active material.
The binder for an electrochemical device according to the present disclosure comprises a polymer material that forms a reversible bond by host-guest interaction. The host-guest interaction can occur, for example, because of a hydrophobic interaction between a host group and a guest group, a hydrogen bond, an intermolecular force, an electrostatic interaction, a coordination bond, a $\pi$-electron interaction, or the like, but is not limited to these.
The bond by this host-guest interaction is a type of non-covalent bond and a reversible bond. Because of this, when a stress equal to or more than a certain level is applied, the bond is easily broken, and when the groups reapproach each other, rebonding occurs.
That is, when the binder for an electrochemical device described above is used, breakage and rebonding of the bond between the host group and the guest group (hereinafter, referred to as the host-guest bond) contained in the polymer material occur in an electrode.
It is generally known that material fracture proceeds from a stress concentration site. However, when a stress equal to or more than a certain level is applied to the polymer material, the host-guest bond is easily broken, and this can relax the stress concentration in one place of the polymer material to disperse the stress throughout the material. As a result, the whole material is uniformly deformed to exhibit high stretchability. In addition, the ability of the crosslinked structure of the polymer to be reformed after dissociation is also referred to as self-repairing properties, and it can be deemed that the binder for an electrochemical device according to the present disclosure has high self-repairing properties.
There has so far been no example of using a polymer material that forms a reversible bond by host-guest interaction as a binder for an electrochemical device. The present disclosure has found that use of the above-described polymer material as a binder can make it possible to follow the volume change of the active material and realize a longer life of the electrochemical device.
The behavior when the binder for an electrochemical device according to the present disclosure is used in a secondary battery will be described.
When discharging a battery containing the binder for an electrochemical device described above, an electron flows from the negative electrode toward the positive electrode, and a metal ion is removed from the negative electrode and moved to the positive electrode, and this enlarges the volume of the positive electrode. In the conventional secondary battery, the positive electrode active material expands, which causes deterioration of the positive electrode active material. However, when the binder for an electrochemical device according to the present disclosure is used, the host-guest bond under a stress equal to or more than a certain level due to the expansion caused by the inflow of a metal ion is

broken to dissociate the crosslinked structure, but the polymer material itself can follow the expansion without being fractured, to maintain the inherent function of the binder.

On the other hand, in the negative electrode, the volume is reduced by the removal of a metal ion. At this time, the applied stress is removed, and the polymer material contracts because of rubber elasticity to prevent the active material from being pulverized. At the same time, the host group and guest group are recontacted and rebonded to reform the crosslinked structure, and thereby the polymer material continues to function as a strong binder.

In addition, during charge, an electron flows from the positive electrode toward the negative electrode, and a metal ion is removed from the positive electrode and moves to the negative electrode. In this case, the host-guest bond is broken at the negative electrode, and the host-guest bond is reformed at the positive electrode.

Therefore, the electrode structures of the positive electrode and the negative electrode can be maintained during charge as well as during discharge.

Further, the electrochemical device using the binder of the present invention has the effect of reduction in the internal resistance. Although the action of exerting such an effect is unclear, it is presumed that the use of the polymer of the present invention can improve an electronic contact, thereby reducing the resistance.

(Binder for electrochemical device)

Hereinafter, the polymer material contained in the binder for an electrochemical device according to the present disclosure will be described in detail.

The polymer material can be, for example, the first embodiment described later or the second embodiment described later. Hereinafter, the polymer material (including the polymer materials of the first embodiment and the second embodiment) may be simply referred to as a "polymer material" in some cases.

(Polymer material of first embodiment)

The first embodiment is a polymer material including a first polymer containing a first constituent unit having a guest group in a side chain and a second polymer containing a second constituent unit having a host group in a side chain.

In addition, at least one of the first polymer and the second polymer preferably has one or more fluorine groups. By having the above-described fluorine group(s), it is possible to obtain a polymer material having much superior elongation percentage and flexibility.

The first polymer is formed having the first constituent unit. The first constituent unit has a guest group in a side chain and functions as a guest group in the first polymer.

The first polymer can have one or more fluorine groups. When the first polymer has one or more fluorine groups, the bond position of the fluorine groups is not limited.

The guest group is not particularly limited, and examples thereof include a hydrocarbon group and an aromatic aryl group.

The hydrocarbon group is not particularly limited, and examples thereof include an alkyl group, an alkenyl group, and an alkynyl group.

Examples of the alkyl group include a linear, branched, cyclic, or caged alkyl group having 1 to 20 carbon atoms such as methyl, ethyl, propyl, isopropyl, butyl, isobutyl, sec-butyl, tert-butyl, pentyl, isopentyl, neopentyl, hexyl, heptyl, octyl, undecyl, dodecyl, tetradecyl, pentadecyl, hexadecyl, heptadecyl, octadecyl, cyclohexyl, or adamantyl.

Examples of the alkenyl group include a linear or branched alkenyl group having 2 to 20 carbon atoms such as vinyl, 1-propen-1-yl, 2-propen-1-yl, isopropenyl, 2-buten-1-yl, 4-penten-1-yl, or 5-hexen-1-yl.

Examples of the alkynyl group include a linear or branched alkynyl group having 2 to 20 carbon atoms such as ethynyl, 1-propyn-1-yl, 2-propyn-1-yl, 4-pentyn-1-yl, or 5-hexyn-1-yl.

The guest group may be linear, branched, cyclic, or caged. The number of carbon atoms of the guest group is preferably 40 or less, and particularly preferably 3 to 20, from the viewpoint of being able to form a strong host-guest interaction. Among such groups, if the guest group is an adamantyl group or the like, such a group is preferable because it can form a strong host-guest interaction with β-cyclodextrin described later.

The guest group optionally has one or more fluorine groups.

When the guest group has a fluorine group, specific examples of this guest group include a hydrocarbon group having one or more fluorine groups (preferably a perfluoro hydrocarbon group), a fluoro(poly)ether group, a perfluoro (poly) ether group, $-O-(CH_2CH_2-O)n-Rf$ (where Rf is a hydrocarbon group having one or more fluorine groups, and n is, for example, 1 to 20), and $-(CF_2)n-CN$ (n is, for example, 1 to 20).

The number of carbon atoms of the hydrocarbon group having one or more fluorine groups is not particularly limited, and is, for example, preferably 40 or less, and more preferably 1 to 20. In this case, the guest group facilitates the host-guest interaction with the host group, and thus the polymer material of the present embodiment has excellent breaking strain. The number of carbon atoms is further preferably 3 to 20, and particularly preferably 3 to 10.

When the guest group is a hydrocarbon group having one or more fluorine groups, the group can be linear or branched, and from the viewpoint that host-guest interaction is more likely to occur, the group is preferably linear. For example, examples of such a preferable guest group include a linear alkyl group having one or more fluorine groups.
When the guest group is a fluoro(poly)ether group, the number of carbon atoms thereof can be, for example, 3 to 40. In addition, the number of oxygen atoms can be, for example, 13 to 30. In this case, the guest group facilitates the host-guest interaction with the host group, and thus the polymer material is likely to have excellent breaking strain. Specific examples of the fluoro(poly)ether group and the perfluoro(poly)ether group include a structure having $-(CF_2CF_2CF_2-O)n-$ or - $(CF_2CF_2-O)n(CF_2-O)m-$ (for example, n and m is each 1 to 20) as a repeating structure thereof and having $-CF_2CF_3$ or $-CF_3$ as a terminal thereof.
When the guest group is a fluoro(poly)ether group, the group may be linear or branched, and from the viewpoint that host-guest interaction is more likely to occur, the group is preferably linear.
When the guest group is $-(CF_2)n-CN$, n is, for example, 1 to 20.
The structure of the first constituent unit forming the first polymer is not particularly limited, and can be, for example, a structure represented by the following general formula (1a):

[Formula 3]

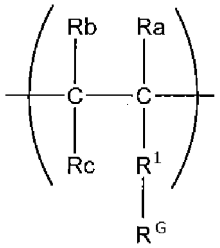

(1a)

wherein Ra represents a hydrogen atom, a methyl group, or a fluorine group;

Rb represents a hydrogen atom or a fluorine group;
Rc represents a hydrogen atom or a fluorine group;
$R^1$ represents a divalent group formed by removing one hydrogen atom from a monovalent group selected from the group consisting of a hydroxy group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, a phenyl group optionally having one or more substituents, an aldehyde group, and a carboxy group, and/or a group represented by $-O-(CH_2-CH_2-O)n-$ (n is 1 to 20); and
$R^G$ represents a guest group.

The structure represented by the above (1a) is a structure formed by polymerizing a monomer represented by the following general formula (1b):

[Formula 4]

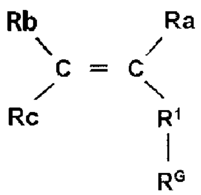

(1b)

wherein
Ra, Rb, Rc, $R^1$, and $R^G$ are as defined in the formula (1a) .
In addition, the first constituent unit can, instead of the constituent unit represented by the general formula (1a) or in combination therewith, be represented by the following formula (1'a):

[Formula 5]

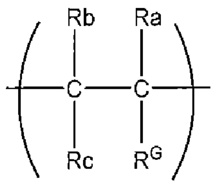

(1'a)

wherein
Ra, Rb, Rc, and $R^G$ are as defined in the formula (1a).

The structure represented by the above (1'a) is a structure formed by polymerizing a monomer represented by the following general formula (1'b):

[Formula 6]

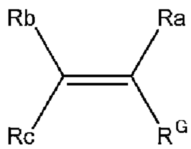

(1'b)

wherein
Ra, Rb, Rc, and $R^G$ are as defined in the formula (1a).

In the formula (1a), when $R^1$ is a divalent group formed by removing one hydrogen atom from an alkoxy group optionally having one or more substituents, an example of the alkoxy group is an alkoxy group having 1 to 10 carbon atoms, and specific examples thereof include a methoxy group, an ethoxy group, a propoxy group, an isopropoxy group, a butoxy group, an isobutoxy group, a sec-butoxy group, a pentyloxy group, and a hexyloxy group; and these may be linear or branched.

In the formula (1a), when $R^1$ is a divalent group formed by removing one hydrogen atom from a thioalkoxy group optionally having one or more substituents, an example of the thioalkoxy group is a thioalkoxy group having 1 to 10 carbon atoms, and specific examples thereof include a methylthio group, an ethylthio group, a propylthio group, an isopropylthio group, a butylthio group, an isobutylthio group, a sec-butylthio group, a pentylthio group, and a hexylthio group; and these may be linear or branched.

In the formula (1a), when $R^1$ is a divalent group formed by removing one hydrogen atom from an alkyl group optionally having one or more substituents, an example of the alkyl group is an alkyl group having 1 to 30 carbon atoms, and specific examples thereof include a methyl group, an ethyl group, a propyl group, an isopropyl group, a butyl group, an isobutyl group, a sec-butyl group, a tert-butyl group, a pentyl group, an isopentyl group, a neopentyl group, and a hexyl group; and these may be linear or branched.

In the formula (1a), when $R^1$ is a divalent group formed by removing one hydrogen atom from an amino group optionally having one or more substituents, the nitrogen atom of the amino group can be bonded to a carbon atom in the main chain (C-C bond). Examples of the substituent referred to herein include the above-described hydrocarbon groups, halogen, and a hydroxyl group.

In the formula (1a), when $R^1$ is a divalent group formed by removing one hydrogen atom from an amide group optionally having one or more substituents, the carbon atom of the amide group can be bonded to a carbon atom in the main chain (C-C bond).

In the formula (1a), when $R^1$ is a divalent group formed by removing one hydrogen atom from a phenyl group optionally having one or more substituents, the carbon atom at any of the ortho position, the meta position, and the para position with respect to $R^G$ may be bonded to a carbon atom of the main chain (C-C bond).

In the formula (1a), when $R^1$ is a divalent group formed by removing one hydrogen atom from an aldehyde group, the carbon atom of the aldehyde group can be bonded to a carbon atom in the main chain (C-C bond).

In the formula (1a), when $R^1$ is a divalent group formed by removing one hydrogen atom from a carboxy group, the carbon atom of the carboxy group can be bonded to a carbon atom in the main chain (C-C bond).

In the formula (1a), when $R^1$ is $-O-(CH_2CH_2-O)n-$, n is, for example, 1 to 20. In addition, examples of the guest group in this case include a hydrocarbon group having one or more fluorine groups, and the number of carbon atoms thereof is preferably, for example, 1 to 10. In this case, the guest group facilitates the host-guest interaction with the

host group, and thus the polymer material of the present embodiment tends to have excellent breaking strain and excellent elongation percentage and flexibility.

In the formula (1a), examples of $R^G$ are the same guest groups as the guest groups described above.

The first constituent unit is described as a polymer using a monomer having a polymerizable unsaturated bond as a raw material, but the first constituent unit of the present disclosure is not limited to such a structure. For example, the first constituent unit may be a constituent unit of at least one resin selected from the group of urethane resin, epoxy resin, and polyester resin. That is, the first constituent unit may be a structure having a urethane bond, an epoxy group, or an ester group in the main chain. In addition thereto, the first constituent unit may be a structure that forms alkyd resin, melamine-formaldehyde resin, a polyisocyanate-based resin, ketone resin, a polyamide-based resin, a polycarbonate-based resin, a polyacetal-based resin, petroleum resin, an inorganic resin such as silica gel or silicic acid.

Examples of the first polymer having the above structure include a (meta)acrylic-based resin (acrylic-based polymer), a polyester-based resin, alkyd resin, polystyrene resin, melamine-formaldehyde resin, a polyisocyanate-based resin, a polyurethane-based resin, an epoxy-based resin, a vinyl chloride-based resin (for example, vinyl chloride-vinyl acetate copolymer), ketone resin, a polyamide-based resin, a polycarbonate-based resin, a polyacetal-based resin, petroleum resin, polyethylene, polypropylene, and an olefin-based resin obtained by polymerizing a chlorinated product or the like of such a polyolefin; an inorganic resin such as silica gel or silicic acid, or an elastomer (rubber) having the basic skeleton of such a resin.

Next, the second polymer will be described.

The second polymer is formed having the second constituent unit. The second constituent unit has a host group in a side chain and functions as a host group in the second polymer.

The second polymer can have one or more fluorine groups. When the second polymer has one or more fluorine groups, the bond position of the fluorine groups is not particularly limited.

Examples of the molecule for forming the host group (hereinafter, sometimes referred to as a "host site") include at least one selected from the group consisting of α-cyclodextrin, β-cyclodextrin, γ-cyclodextrin, calix[6]arenesulfonic acid, calix[8]arenesulfonic acid, 12-crown-4, 18-crown-6, [6]paracyclophane, [2,2]paracyclophane, cucurbit[6]uril, and cucurbit[8]uril. These host sites may have a substituent. That is, a host site may be a derivative of the above host site.

The host site is preferably a cyclodextrin or a derivative thereof (as used herein, the term cyclodextrin includes what is chemically derived from a cyclodextrin). In this case, the interaction is likely to occur, and thereby the polymer material has an improved mechanical property and particularly is excellent in breaking strain and excellent in elongation percentage and flexibility. In addition, the polymer material also has higher transparency.

The type of the derivative of a cyclodextrin is not particularly limited, and for example, a cyclodextrin derivative produced by a known method can be applied as a host site.

In addition, when the guest group is an alkyl group, the host site is preferably α- or β-cyclodextrin and a derivative thereof, and when the guest group is particularly a fluoroalkyl group, the host site is preferably γ-cyclodextrin and a derivative thereof. In this case, the host-guest interaction with the guest group is particularly likely to occur, and the polymer material is excellent in breaking strain and excellent in elongation percentage and flexibility.

The host group may be a group in which a methylene group ($-CH_2-$) is bonded to an oxygen atom derived from a hydroxyl group of a cyclodextrin or a derivative thereof. In this case, the methylene group can be bonded to the main chain or a side chain of the second constituent unit. That is, the methylene group can be bonded to the main chain or a side chain of the second polymer. The methylene group ($-CH_2-$) plays the role as a so-called linker between the main chain of the second polymer and the cyclodextrin, which is a host site. This imparts flexibility to the second polymer, which facilitates the host-guest interaction. As a result, the polymer material has high breaking strain and is excellent in elongation percentage and flexibility.

The methylene group can be bonded to a side chain of the second polymer, and for example, when the constituent unit of the second polymer is the constituent unit represented by the general formula (2a) described later, the methylene group can be bonded to $R^2$ thereof. More specifically, when a side chain of the second polymer has an ester group, a methylene group can be bonded to the oxygen atom of the ester group, and when a side chain of the second polymer has an amide group, a methylene group can be bonded to the nitrogen atom of the amide group. In addition, the methylene group may be bonded to a C-C carbon atom of the main chain.

The structure of the second constituent unit forming the second polymer is not particularly limited, and can have, for example, a constituent unit represented by the following general formula (2a):

[Formula 7]

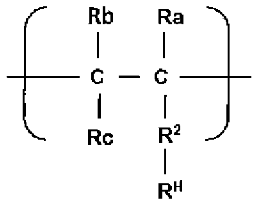

(2a)

wherein Ra represents a hydrogen atom, a methyl group, or a fluorine group; Rb represents a hydrogen atom or a fluorine group; Rc represents a hydrogen atom or a fluorine group; $R^2$ represents a divalent group formed by removing one hydrogen atom from a monovalent group selected from the group consisting of a hydroxyl group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, an aldehyde group, and a carboxy group, or $-C(O)NH-(CH_2)_n$,-O-C(O)- (n is 2 to 8); and $R^H$ represents the host group.

In the formula (2a), when $R^2$ is a divalent group formed by removing one hydrogen atom from an alkoxy group optionally having one or more substituents, an example of the alkoxy group is an alkoxy group having 1 to 10 carbon atoms, specific examples thereof include a methoxy group, an ethoxy group, a propoxy group, an isopropoxy group, a butoxy group, an isobutoxy group, a sec-butoxy group, a pentyloxy group, and a hexyloxy group; and these can be linear or branched.

In the formula (2a), when $R^2$ is a divalent group formed by removing one hydrogen atom from a thioalkoxy group optionally having one or more substituents, an example of the thioalkoxy group is a thioalkoxy group having 1 to 10 carbon atoms, and specific examples thereof include a methylthio group, an ethylthio group, a propylthio group, an isopropylthio group, a butylthio group, an isobutylthio group, a sec-butylthio group, a pentylthio group, and a hexylthio group; and these can be linear or branched.

In the formula (2a), when $R^2$ is a divalent group formed by removing one hydrogen atom from an alkyl group optionally having one or more substituents, an example of the alkyl group is an alkyl group having 1 to 30 carbon atoms, and specific examples thereof include a methyl group, an ethyl group, propyl group, an isopropyl group, a butyl group, an isobutyl group, a sec-butyl group, a tert-butyl group, a pentyl group, an isopentyl group, a neopentyl group, and a hexyl group; and these can be linear or branched.

In the formula (2a), when $R^2$ is a divalent group formed by removing one hydrogen atom from an amino group optionally having one or more substituents, the nitrogen atom of the amino group can be bonded to a carbon atom in the main chain (C-C bond).

In the formula (2a), when $R^2$ is a divalent group formed by removing one hydrogen atom from an amide group optionally having one or more substituents, the carbon atom of the amide group can be bonded to a carbon atom in the main chain (C-C bond).

In the formula (2a), when $R^2$ is a divalent group formed by removing one hydrogen atom from an aldehyde group, the carbon atom of the aldehyde group can be bonded to a carbon atom in the main chain (C-C bond).

In the formula (2a), when $R^2$ is a divalent group formed by removing one hydrogen atom from a carboxy group, the carbon atom of the carboxy group can be bonded to a carbon atom in the main chain (C-C bond).

In the formula (2a), examples of $R^H$ include the host groups described above.

In formula (2a), $R^2$ is preferably a divalent group formed by removing one hydrogen atom from a monovalent group selected from the group consisting of an amide group and a carboxy group. That is, the constituent unit represented by the formula (2a) preferably has at least either one of a structure having an amide group in which a hydrogen atom is replaced with $R^H$ in a side chain and a structure having a carboxy group in which a hydrogen atom is replaced with $R^H$ in a side chain. In this case, the polymer material of the present disclosure is likely to be easily produced.

The second constituent unit may have no fluorine group, and when the second constituent unit has a fluorine group, the number of fluorine atoms is preferably 10 or less.

The structure represented by the above (2a) is a structure formed by polymerizing a monomer represented by the following general formula (2b):

[Formula 8]

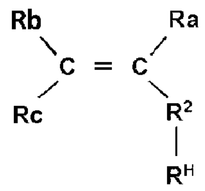

(2b)

wherein Ra, Rb, Rc, $R^2$, and $R^H$ are as defined for Ra, Rb, Rc, $R^2$, and $R^H$ in the formula (2a) .

The second constituent unit may be a structure other than the structure represented by the formula (2a). For example, the second constituent unit may be any of the resin constituent units exemplified in the first constituent unit.

In addition, examples of the second polymer having the above structure include the compounds described for the first polymer.

The first polymer and the second polymer have a first constituent unit and a second constituent unit, respectively, and can also further have a constituent unit other than the same.

For example, the first polymer can contain the second constituent unit in addition to the first constituent unit. In addition, the second polymer can contain the first constituent unit in addition to the second constituent unit.

Further, both the first polymer and the second polymer can contain a constituent unit other than the first constituent unit and the second constituent unit as long as the host-guest interaction is possible. Examples of such a constituent unit include a constituent unit copolymerizable with the first constituent unit and the second constituent unit (hereinafter, referred to as the "third constituent unit").

The third constituent unit may contain, for example, a constituent unit represented by the following formula (3a):

[Formula 9]

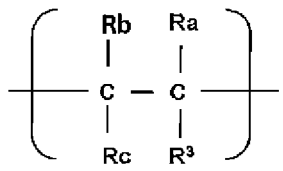

(3a)

wherein Ra is a hydrogen atom, a methyl group, or a fluorine group; Rb is a hydrogen atom or a fluorine group; Rc is a hydrogen atom or a fluorine group; and $R^3$ is fluorine, chlorine, bromine, iodine, a hydroxyl group, a thiol group, an amino group optionally having one or more substituents, a carboxy group optionally having one substituent, or an amide group optionally having one or more substituents.

In the formula (3a), when $R^3$ is a carboxy group having one substituent, examples of the carboxy group include a carboxy group in which the hydrogen atom of the carboxy group is replaced with an alkyl group (for example, a methyl group or an ethyl group) or a hydroxyalkyl group (for example, a hydroxymethyl group or a hydroxyethyl group).

In the formula (3a), when $R^3$ is an amide group having one or more substituents, that is, a secondary amide or a tertiary amide, examples of the amide group include an amide group in which at least one hydrogen atom or two hydrogen atoms of the primary amide are replaced with an alkyl group (for example, a methyl group or an ethyl group) or a hydroxyalkyl group (for example, a hydroxymethyl group or a hydroxyethyl group).

In addition, in the formula (3a), $R^3$ is preferably an amino group; an amide group; an amide group in which a hydrogen atom is replaced with an alkyl group, a hydroxyl group, or an alkoxyl group; a carboxy group; or a carboxy group in which a hydrogen atom is replaced with an alkyl group, a hydroxyalkyl group (for example, a hydroxyethyl group), or an alkoxyl group.

Ra, Rb, and Rc in the formulas (1a), (2a), and (3a) may be identical to or different from each other.

The structure represented by the above (3a) is a structure formed by polymerizing a monomer represented by the following general formula (3b):

[Formula 10]

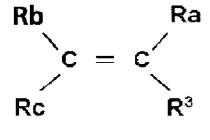

(3b)

wherein Ra, Rb, Rc, and $R^3$ are as defined in the formula (3a).

When the first polymer has the second and/or the third constituent unit in addition to the first constituent unit, the arrangement order of each constituent unit is not restricted, and for example, these can be arranged at random. In this case, the first polymer is a so-called random copolymer. The first polymer may also be a block copolymer or an alternating copolymer.

Similarly, when the second polymer has the first and/or the third constituent unit in addition to the second constituent unit, the arrangement order of each constituent unit is not restricted, and for example, these can be arranged at random. In this case, the second polymer is a so-called random copolymer. Naturally, the second polymer may also be a block copolymer or an alternating copolymer.

The numbers of constituent units contained in the first polymer and the second polymer is not particularly limited, and can each be, for example, 10,000 to 300,000.

The polymer material of the first embodiment contains the first polymer and the second polymer. For example, in the polymer material of the first embodiment, the first polymer and the second polymer have host-guest interaction. The polymer material of the first embodiment may contain another polymer other than the first polymer and the second polymer as long as the effects of the present disclosure are not impaired. The another polymer may be physically mixed with the first polymer and the second polymer, and in this case the polymer material is a so-called polymer blend.

The blending ratio of the first polymer and the second polymer is not limited, and is preferably 1:2 to 1:0.5.

(Polymer material of second embodiment)

The polymer material of the second embodiment contains a third polymer having the first constituent unit, the second constituent unit, and the third constituent unit in one molecule. At least one constituent unit of the first constituent unit, the second constituent unit, and the third constituent unit preferably has one or more fluorine groups.

In the polymer material of the second embodiment, for example, host-guest interaction is formed between and within molecules.

The third polymer may be a random copolymer, a block copolymer, an alternating copolymer, or the like, and the arrangement order of the constituent units is not particularly limited.

When the polymer material has the first constituent unit, the second constituent unit, and the third constituent unit, the content of each is not particularly limited.

For example, the content of the first constituent unit can be 0.01 to 30 mol% and the content of the second constituent unit can be 0.01 to 0.30 mol% based on the total number of moles of the first constituent unit, the second constituent unit, and the third constituent unit. In this case, the interaction between the host group and the guest group is likely to occur, the polymer material has high breaking strain and is excellent in elongation percentage and flexibility. Preferably, the content of the first constituent unit is 0.1 to 10 mol% and the content of the second constituent unit is 0.1 to 10 mol%, and more preferably, the content of the first constituent unit is 0.5 to 3 mol% and the content of the second constituent unit is 0.5 to 3 mol%, based on the total number of moles of the first constituent unit, the second constituent unit, and the third constituent unit. In addition, particularly preferably, the content of the first constituent unit and the content of the second constituent unit are each 0.5 to 2 mol% based on the number of moles of all the constituent units.

In the polymer material, the total number of fluorine groups contained in the first constituent unit and the second constituent unit is preferably 4 or more. In this case, the polymer material can have quite excellent elongation.

Further, the total number of the fluorine groups is preferably 40 or less, and particularly preferably 6 or more and 30 or less.

The polymer material according to the present disclosure may be chemically treated after polymerization to modify the polymer material as long as the effects of the present disclosure are not impaired. For example, a polymer material synthesized using vinyl acetate as a polymerizable monomer that can be polymerized to form the third constituent unit can be transformed into polyvinyl alcohol having host-guest interaction because an acetyl group derived from vinyl acetate is deprotected by treating the polymer material with a base such as sodium hydroxide. In addition, for example, a polymer material having host-guest interaction can be modified by adding a cross-linking agent to the polymer material in a raw rubber state and heating (vulcanizing) the polymer material. The modified polymer material in this case is an elastomer (rubber).

The form of the polymer material is not particularly limited, and may be a polymer gel containing a solvent.

When the polymer material is a polymer gel, the type of a solvent is not particularly limited. For example, examples of the solvent include water and an organic solvent such as alcohol.

The production method of each polymer material used in the binder for an electrochemical device according to the present disclosure is not particularly limited, and the polymer material can be produced by the method disclosed in, for example, International Publication No. 2018/038186, International Publication No. 2013/162019, or International Publication No. 2012/036069. Specifically, the polymer material can be produced by copolymerizing an unsaturated monomer having a host group and an unsaturated monomer having a guest group, each alone or with another unsaturated

monomer.

(Electrode mixture)

The present disclosure is also an electrode mixture comprising the binder for an electrochemical device described above, an electrode active material, and water or a non-aqueous solvent. The electrode active material is divided into a positive electrode active material and a negative electrode active material. The positive electrode active material and the negative electrode active material are not particularly limited, and examples thereof include ones used in a known electrochemical device such as a secondary battery such as a lead battery, a NiCd battery, a nickel hydrogen battery, a lithium ion battery, or an alkali metal sulfur battery, or an electric double layer capacitor.

<Positive electrode>

The positive electrode active material is not particularly limited, and examples thereof include one used in a known electrochemical device. The positive electrode active material of the lithium ion secondary battery will be specifically described below; the positive electrode active material is not particularly restricted as long as it can electrochemically absorb and desorb a lithium ion, and examples thereof include a lithium-containing transition metal composite oxide, a lithium-containing transition metal phosphoric acid compound, a sulfur-based material, and a conductive polymer. Among these, the positive electrode active material is preferably a lithium-containing transition metal composite oxide or a lithium-containing transition metal phosphoric acid compound, and particularly preferably a lithium-containing transition metal composite oxide that produces a high voltage.

The transition metal of the lithium-containing transition metal composite oxide is preferably V, Ti, Cr, Mn, Fe, Co, Ni, Cu, or the like, and specific examples of the lithium transition metal composite oxide include a lithium-cobalt composite oxide such as $LiCoO_2$, a lithium-nickel composite oxide such as $LiNiO_2$, a lithium-manganese composite oxide such as $LiMnO_2$, $LiMn_2O_4$, or $Li_2MnO_3$, and such lithium transition metal composite oxides in which a part of the transition metal atoms that predominantly constitute the same is replaced with another metal such as Al, Ti, V, Cr, Mn, Fe, Co, Li, Ni, Cu, Zn, Mg, Ga, Zr, or Si. Examples of those involving the above-described replacement include lithium-nickel-manganese composite oxide, lithium-nickel-cobalt-aluminum composite oxide, lithium-nickel-cobalt-manganese composite oxide, lithium-manganese-aluminum composite oxide, and lithium-titanium composite oxide, and more specifical examples include $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, $LiMn_{1.8}Al_{0.2}O_4$, $LiMn_{1.5}Ni_{0.5}O_4$, $Li_4Ti_5O_{12}$, and $LiNi_{0.82}Co_{0.15}Al_{0.03}O_2$.

The transition metal of the lithium-containing transition metal phosphoric acid compound is preferably V, Ti, Cr, Mn, Fe, Co, Ni, Cu, or the like, and specific examples of the lithium-containing transition metal phosphoric acid compound include an iron phosphate such as $LiFePO_4$, $Li_3Fe_2(PO_4)_3$, or $LiFeP_2O_7$, a cobalt phosphate such as $LiCoPO_4$, and such lithium transition metal phosphoric acid compounds in which a part of the transition metal atoms that predominantly constitute the same is replaced with another metal such as Al, Ti, V, Cr, Mn, Fe, Co, Li, Ni, Cu, Zn, Mg, Ga, Zr, Nb, or Si.

In particular, from the viewpoint of high voltage, high energy density, charge/discharge cycle characteristics, and the like, $LiCoO_2$, $LiNiO_2$, $LiMn_2O_4$, $LiNi_{0.82}CO_{0.15}Al_{0.03}O_2$, $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiFePO_4$ are preferable.

Examples of the sulfur-based material include a material containing a sulfur atom, and at least one selected from the group consisting of elemental sulfur, a metal sulfide, and an organic sulfur compound is preferable, and elemental sulfur is more preferable. The metal sulfide may be a metal polysulfide. The organic sulfur compound may be an organic polysulfide.

Examples of the metal sulfide include a compound represented by $LiS_x$ ($0 < x \leq 8$); a compound represented by $Li_2S_x$ ($0 < x \leq 8$); a compound having a two-dimensional layered structure such as $TiS_2$ or $MoS_2$; and a Chevrel compound having a strong three-dimensional skeleton structure represented by the general formula $Me_xMo_6S_8$ (Me is any of various transition metals such as Pb, Ag, and Cu) .

Examples of the organic sulfur compound include a carbon sulfide compound.

The organic sulfur compound may be carried on a material having a pore such as carbon and used as a carbon composite material in some cases. The content of sulfur contained in the carbon composite material is preferably 10 to 99% by weight, more preferably 20% by weight or more, further preferably 30% by weight or more, and particularly preferably 40% by weight or more, and preferably 85% by weight or less, based on the carbon composite material, because the cycle performance is further better and the overvoltage is further reduced.

When the positive electrode active material is the elemental sulfur, the content of sulfur contained in the positive electrode active material is equal to the content of the elemental sulfur.

Examples of the conductive polymer include a p-doped conductive polymer and an n-doped conductive polymer. Examples of the conductive polymer include polyacetylene-based, polyphenylene-based, and heterocyclic polymers,

ionic polymers, and ladder and network polymers.

In addition, a substance having a composition different from that of the substance predominantly constituting the positive electrode active material can also be used to attach it to the surface of the positive electrode active material. Examples of the surface attached substance include an oxide such as aluminum oxide, silicon oxide, titanium oxide, zirconium oxide, magnesium oxide, calcium oxide, boron oxide, antimony oxide, or bismuth oxide; a sulfate such as lithium sulfate, sodium sulfate, potassium sulfate, magnesium sulfate, calcium sulfate, or aluminum sulfate; a carbonate such as lithium carbonate, calcium carbonate, or magnesium carbonate; and an organic polymer.

The surface attached substance can be attached to the surface of the positive electrode active material, for example, by a method of dissolving or suspending the substance in a solvent to add the solution or suspension to a positive electrode active material by impregnation, and then drying the active material; a method of dissolving or suspending a precursor of the surface attached substance in a solvent to add the solution or suspension to a positive electrode active material by impregnation, and then causing a reaction by heating or the like; or a method of adding the substance to a precursor of a positive electrode active material and at the same time, firing the resulting mixture.

The surface attached substance is used in an amount of, as the lower limit, preferably 0.1 ppm or more, more preferably 1 ppm or more, and further preferably 10 ppm or more, and, as the upper limit, preferably 20% or less, more preferably 10% or less, and further preferably 5% or less, by weight based on the amount of the positive electrode active material. The surface attached substance can suppress the oxidation reaction of the non-aqueous electrolytic solution on the surface of the positive electrode active material and improve the battery life, but if the amount attached is too low, the effect thereof is not sufficiently developed, whereas if the amount attached is too high, the surface attached substance may inhibit the entry and exit of a lithium ion and thus the resistance increases in some cases.

Examples of the shape of a particle of the positive electrode active material used include a lump shape, a polyhedral shape, a spherical shape, an oval spherical shape, a plate shape, a needle shape, and a columnar shape, which are conventionally used, and among these, the shape of a secondary particle formed by aggregation of a primary particle is preferably spherical or oval spherical. Usually, in an electrochemical element, the active material in the electrode expands and contracts with the charge and discharge thereof, and thus the stress is likely to cause a deterioration such as fracture of the active material or breakage of the conductive path. Because of this, a particle active material obtained by aggregation of the primary particle to form the secondary particle is more preferable than the single particle active material containing only the primary particle because the former relaxes the stress of expansion and contraction to prevent a deterioration. In addition, a spherical or oval spherical particle is less oriented in shaping of an electrode than an axis-oriented particle such as a plate-shaped particle, and thus the expansion and contraction of the electrode during charge and discharge is also smaller, and even when mixed with a conductive agent in creation of the electrode, the spherical or oval spherical particle is easily mixed therewith uniformly, and thus is preferable.

The positive electrode active material has a tap density of usually 1.5 $g/cm^3$ or more, preferably 2.0 $g/cm^3$ or more, further preferably 2.5 $g/cm^3$ or more, and most preferably 3.0 $g/cm^3$ or more. If the tap density of the positive electrode active material is less than the above lower limit, the amount of a dispersion medium required in formation of a positive electrode active material layer may increase, the amounts of a conductive material and a binder required may increase, the rate of filling the positive electrode active material layer with the positive electrode active material may be restricted, and the battery capacity may be restricted, in some cases. Use of a metal composite oxide powder having a high tap density allows formation of a high-density positive electrode active material layer. A larger tap density is generally more preferable, the upper limit thereof is not set, and the tap density is usually 4.5 $g/cm^3$ or less and preferably 4.3 $g/cm^3$ or less.

The tap density of the positive electrode active material is determined as follows: the positive electrode active material is passed through a sieve having an opening size of 300 $\mu m$, a sample is dropped into a 20-$cm^3$ tapping cell to fill the cell volume, and then a powder density measuring instrument (for example, Tap Denser manufactured by Seishin Enterprise Co., Ltd.) is used to perform tapping at a stroke length of 10 mm 1000 times, and the density obtained from the volume and the weight of the sample at that time is defined as the tap density.

The positive electrode active material particle has a median size d50 (secondary particle size when a primary particle aggregates to form a secondary particle) of usually 0.1 $\mu m$ or more, preferably 0.5 $\mu m$ or more, more preferably 1 $\mu m$ or more, and most preferably 3 $\mu m$ or more, and usually 20 $\mu m$ or less, preferably 18 $\mu m$ or less, more preferably 16 $\mu m$ or less, and most preferably 15 $\mu m$ or less. If the median size is less than the above lower limit, a high bulk density product may not be obtained in some cases, and if the median size exceeds the upper limit, dispersion of lithium in the particle takes a longer time, which may thus, in some cases, cause a problem such as degradation in battery performance or formation of a streak when a positive electrode of a battery is created, that is, when the active material, a conductive agent, a binder, or the like is slurried with a solvent and applied in the form of a thin film. Here, it is also possible to further improve the filling properties when the positive electrode is created, by mixing two or more positive electrode active materials having different median diameters d50.

The median size d50 in the present disclosure is measured using a known laser diffraction/scattering type particle size distribution measuring instrument. When LA-920 manufactured by HORIBA, Ltd. is used as a particle size

distribution analyzer, the median size is measured using a 0.1 wt% sodium hexametaphosphate aqueous solution as a dispersion medium used in the measurement, and by setting the measurement refractive index to 1.24 after ultrasonic dispersion for 5 minutes.

When the primary particle aggregates to form a secondary particle, the average primary particle size of the positive electrode active material is usually 0.01 μm or more, preferably 0.05 μm or more, further preferably 0.08 μm or more, and most preferably 0.1 μm or more, and usually 3 μm or less, preferably 2 μm or less, further preferably 1 μm or less, and most preferably 0.6 μm or less. If the average primary particle size exceeds the above upper limit, it is difficult to form a spherical secondary particle, which may adversely affect the powder filling properties and greatly reduce the specific surface area, and thus be likely to reduce battery performance characteristics such as output characteristics in some cases. On the contrary, if the average primary particle size is less than the above lower limit, a crystal is usually underdeveloped, and thus a problem such as poor reversibility of charge/discharge may occur in some cases. The primary particle size is measured by observation using a scanning electron microscope (SEM). Specifically, in a photograph at a magnification of 10000, the longest value of the intercept by the left and right boundary lines of a primary particle with respect to the straight line in the horizontal direction is obtained for any 50 primary particles, and the average value thereof is taken as the average primary particle size.

The BET specific surface area of the positive electrode active material is 0.2 $m^2/g$ or more, preferably 0.3 $m^2/g$ or more, and further preferably 0.4 $m^2/g$ or more, and 50 $m^2/g$ or less, preferably 10 $m^2/g$ or less, and further preferably 5.0 $m^2/g$ or less. If the BET specific surface area is smaller than this range, the battery performance tends to deteriorate, and if the BET specific surface area is larger, the tap density does not easily increase, and a problem may easily occur with the applicability during formation of the positive electrode active material in some cases.

The BET specific surface area is determined as follows: a sample is predried under nitrogen gas circulation at 150°C for 30 minutes and then is subjected to measurement using a surface meter (for example, a fully automatic surface area measuring instrument manufactured by Okura Riken), using a nitrogen-helium mixed gas accurately adjusted such that the value of the relative pressure of nitrogen with respect to atmospheric pressure is 0.3, and by a nitrogen adsorption BET one-point method by a gas flow method, and the measured value is defined as the BET specific surface area.

As a method of producing a positive electrode active material, a method that is general as a method of producing an inorganic compound is used. In particular, various methods can be considered for producing a spherical or oval spherical active material, and examples thereof include a method in which a transition metal source material such as a nitrate or a sulfate of a transition metal and optionally a source material of another element are dissolved or crushed and dispersed in a solvent such as water, the pH of the resulting liquid is regulated with stirring to create and recover a spherical precursor, the recovered precursor is optionally dried, then a Li source such as LiOH, $Li_2CO_3$, or $LiNO_3$ is added, the resulting mixture is fired at a high temperature to obtain an active material; a method in which a transition metal source material such as a nitrate, a sulfate, a hydroxide, or an oxide and optionally a source material of another element are dissolved or crushed and dispersed in a solvent such as water, then the resulting liquid is sprayed and shaped using a spray dryer or the like into a spherical or oval spherical precursor, a Li source such as LiOH, $Li_2CO_3$, and $LiNO_3$ is added thereto, the resulting mixture is fired at a high temperature to obtain an active material; and a method in which a transition metal source material such as a nitrate, a sulfate, a hydroxide, or an oxide, a Li source such as LiOH, $Li_2CO_3$, and $LiNO_3$, and optionally a source material of another element are dissolved or crushed and dispersed in a solvent such as water, then the resulting liquid is sprayed and shaped using a spray dryer or the like into a spherical or oval spherical precursor, and this precursor is fired at a high temperature to obtain an active material.

In the present disclosure, one positive electrode active material may be used alone, or two or more positive electrode active materials having different compositions or different powder physical properties may be used together in any combination and at any ratio.

<Negative electrode>

The negative electrode is composed of a negative electrode active material layer containing a negative electrode active material, and a current collector. The negative electrode active material is not particularly limited, and examples thereof include one used in a known electrochemical device. The positive electrode active material of the lithium ion secondary battery will be specifically described below; the positive electrode active material is not particularly limited as long as it can electrochemically absorb and desorb a lithium ion. Specific examples thereof include a carbonaceous material, an alloy-based material, a lithium-containing metal composite oxide material, and a conductive polymer. One of these may be used alone or two or more may be used together in any combination.

The carbonaceous material that can absorb and desorb lithium is preferably artificial graphite produced by high-temperature treatment of graphitizable pitch obtained from various raw materials or purified natural graphite, or a material obtained by surface treatment of one of these graphites with pitch or another organic substance followed by carbonization; and more preferably a carbonaceous material selected from natural graphite, artificial graphite, a carbonaceous material obtained by heat-treating an artificial carbonaceous substance and an artificial graphite substance one

or more times in the range of 400 to 3200°C, a carbonaceous material in which a negative electrode active material consists of at least two carbonaceous substances having different crystallinities and/or has an interface at which the carbonaceous substances having different crystallinities are in contact with each other, and a carbonaceous material in which a negative electrode active material layer has an interface at which at least two carbonaceous substances having different orientations are in contact with each other, because it has a good balance between the initial irreversible capacity and the charge/discharge characteristics at high current density. One of these carbonaceous materials can be used alone, or two or more thereof can be used together in any combination and at any ratio.

Examples of the carbonaceous material obtained by heat-treating an artificial carbonaceous substance and an artificial graphite substance one or more times in the range of 400 to 3200°C include a carbon nanotube, graphene, a coal-based coke, a petroleum-based coke, a coal-based pitch, a petroleum-based pitch and those obtained by oxidizing these pitches, needle coke, pitch coke, and carbon materials obtained by partially graphitizing these cokes, furnace black, acetylene black, a pyrolysate of an organic substance such as a pitch-based carbon fiber, a carbonizable organic substance and a carbonization product thereof, and a solution obtained by dissolving a carbonizable organic substance in a low molecular weight organic solvent such as benzene, toluene, xylene, quinoline, or n-hexane and a carbonization product thereof.

A metal material (excluding lithium titanium composite oxide) used as the negative electrode active material is not restricted and may be any of elemental lithium, an elemental metal and an alloy forming a lithium alloy, or a compound such as oxides, carbides, nitrides, silicides, sulfides, or phosphides thereof as long as it can absorb and desorb lithium. The elemental metal and alloy forming a lithium alloy are preferably a material containing group 13 and group 14 metal/semi-metal elements, and more preferably elemental metals of aluminum, silicon, and tin (hereinafter, abbreviated as "specific metal elements") and an alloy or a compound containing these atoms. One of these may be used alone, or two or more thereof may be used together in any combination and at any ratio.

Examples of the negative electrode active material having at least one atom selected from the specific metal elements include an elemental metal of any one specific metal, an alloy consisting of two or more specific metal elements, an alloy consisting of one or two or more specific metal elements and one or two or more other metal elements, and a compound containing one or two or more specific metal elements, and a composite compound such as an oxide, a carbide, a nitride, and a silicate, a sulfide, or a phosphate of the compound. Use of such an elemental metal, an alloy, or a metal compound as the negative electrode active material can increase the capacity of the battery.

As a metal particle that can be alloyed with Li, any conventionally known metal particle can be used, and from the viewpoint of capacity and cycle life, the metal particle is preferably a metal selected from the group consisting of Fe, Co, Sb, Bi, Pb, Ni, Ag, Si, Sn, Al, Zr, Cr, P, S, V, Mn, Nb, Mo, Cu, Zn, Ge, In, Ti, and the like or a compound thereof. In addition, an alloy consisting of two or more metals may be used, and the metal particle may be an alloy particle formed by two or more metal elements. Among these, a metal selected from the group consisting of Si, Sn, As, Sb, Al, Zn, and W or a metal compound thereof is preferable.

Examples of the metal compound include a metal oxide, a metal nitride, and a metal carbide. In addition, an alloy consisting of two or more metals may be used.

In addition, further examples include a compound in which such a composite compound is complicatedly bonded to an elemental metal, an alloy, or several elements such as a non-metal element. Specifically, for example for silicon and tin, an alloy of such an element and a metal that does not act as a negative electrode can be used. For example, in the case of tin, a complicated compound containing 5 or 6 elements, obtained by combining tin, a metal that acts as a negative electrode, except for silicon, a metal that does not act as a negative electrode, and a non-metal element can also be used.

Among the metal particles that can be alloyed with Li, Si or a Si metal compound is preferable. The Si metal compound is preferably a Si metal oxide. Si or the Si metal compound is preferable in terms of increasing the capacity. As used herein, Si or a Si metal compound is collectively referred to as a Si compound. Specific examples of the Si compound include SiOx, SiNx, SiCx, and SiZxOy (Z = C or N). The Si compound is preferably a Si metal oxide, and the Si metal oxide is SiOx as represented by a general formula. This general formula SiOx is obtained using silicon dioxide (SiO2) and metal Si (Si) as raw materials, and the value of x is usually $0 \leq x < 2$. SiOx has a larger theoretical capacity than graphite, and an amorphous Si or nano-sized Si crystal allows an alkaline ion such as a lithium ion to easily enter and exit the same, making it possible to obtain a high capacity.

The Si metal oxide is specifically represented by SiOx, wherein x is $0 \leq x < 2$, more preferably 0.2 or more and 1.8 or less, further preferably 0.4 or more and 1.6 or less, and particularly preferably 0.6 or more and 1.4 or less, and X = 0 is especially preferable. Within this range, it is possible to provide a high capacity and at the same time reduce the irreversible capacity due to the bonding of Li and oxygen.

In addition, examples include a composite material containing Si or Sn as a first constituent element and second and third constituent elements in addition thereto. The second constituent element is, for example, at least one of cobalt, iron, magnesium, titanium, vanadium, chromium, manganese, nickel, copper, zinc, gallium, and zirconium. The third constituent element is, for example, at least one of boron, carbon, aluminum, and phosphorus.

The lithium-containing metal composite oxide material used as the negative electrode active material is not limited as long as it can absorb and desorb lithium, and is preferably a material containing titanium and lithium, more preferably a lithium-containing composite metal oxide material containing titanium, and further preferably a composite oxide of lithium and titanium (hereinafter, abbreviated as a "lithium-titanium composite oxide"), from the viewpoint of charge/discharge characteristics at high current density. That is, a lithium-titanium composite oxide having a spinel structure is particularly preferable because when it is contained in the negative electrode active material for an electrolytic solution battery and used, the output resistance is greatly reduced.
The lithium-titanium composite oxide is preferably a compound represented by the general formula:

$$Li_xTi_yM_zO_4$$

wherein M represents at least one element selected from the group consisting of Na, K, Co, Al, Fe, Ti, Mg, Cr, Ga, Cu, Zn, and Nb.
Among the above compositions, a structure satisfying one of the following:

(i) $1.2 \leq x \leq 1.4$, $1.5 \leq y \leq 1.7$, $z = 0$
(ii) $0.9 \leq x \leq 1.1$, $1.9 \leq y \leq 2.1$, $z = 0$
(iii) $0.7 \leq x \leq 0.9$, $2.1 \leq y \leq 2.3$, $z = 0$

is particularly preferable because the structure provides a good balance of battery performance.
A particularly preferable representative composition of the above compound is $Li_{4/3}Ti_{5/3}O_4$ for (i), $Li_1Ti_2O_4$ for (ii), and $Li_{4/5}Ti_{11/5}O_4$ for (iii) . In addition, preferable examples of the structure satisfying Z # 0 include $Li_{4/3}Ti_{4/3}Al_{1/3}O_4$.
The content of the electrode active material (positive electrode active material or negative electrode active material) is preferably 40% by weight or more in the electrode mixture in order to increase the capacity of the electrode obtained.
The electrode mixture may further contain a conductive agent. The conductive agent is an additive blended to improve conductivity, and examples thereof include a carbon powder such as graphite, Ketjen black, inverse opal carbon, or acetylene black, and various carbon fibers such as a vapor-grown carbon fiber (VGCF), a graphene sheet, and a carbon nanotube (CNT).
The electrode mixture of the present disclosure further contains a dispersion medium of an aqueous solvent or an organic solvent. Water is usually used as the aqueous solvent, and an alcohol such as ethanol or an organic solvent such as a cyclic amide such as N-methylpyrrolidone can also be used together with water in the range of 30% by weight or less based on water. Examples of the organic solvent include a nitrogen-containing organic solvent such as N-methyl-2-pyrrolidone, N,N-dimethylacetamide, or dimethylformamide; a ketone-based solvent such as acetone, methyl ethyl ketone, cyclohexanone, or methyl isobutyl ketone; an ester-based solvent such as ethyl acetate or butyl acetate; an ether-based solvent such as tetrahydrofuran or dioxane; and a general-purpose organic solvent having a low boiling point such as a mixed solvent thereof. Any one of these may be used alone, or two or more thereof may be used together in any combination and at any ratio. Among these, N-methyl-2-pyrrolidone and/or N,N-dimethylacetamide are preferable from the viewpoint of excellent stability and applicability of the electrode mixture.
In addition, a thickener can be used to stabilize the slurry. Examples of the thickener include carboxymethyl cellulose, methyl cellulose, hydroxymethyl cellulose, ethyl cellulose, polyvinyl alcohol, oxidized starch, phosphorylated starch, and casein. One of these may be used alone, or two or more thereof may be used together in any combination and at any ratio. The thickener may be used as needed, and when used, the content of the thickener in the negative electrode active material layer is usually preferably in the range of 0.5% by weight or more and 5% by weight or less.
The amount of the dispersion medium blended in the electrode mixture is determined in consideration of the applicability to the current collector, the thin film forming properties after drying, and the like. The proportion of the binder for an electrochemical device to the dispersion medium is preferably 0.5:99.5 to 20:80 in terms of weight ratio.
The electrode mixture may further contain, for example, an acrylic resin such as polymethacrylate or polymethylmethacrylate, a polyimide-, polyamide-, or polyamideimide-based resin, or the like in order to further improve the adhesiveness to the current collector. In addition, a cross-linking agent may be added and irradiation with a radiation such as a $\gamma$-ray or an electron beam can be performed to form a cross-linked structure. The cross-linking treatment method is not limited to irradiation with a radiation, and as another cross-linking method, for example an amine group-containing compound capable of thermal cross-linking, a cyanurate group-containing compound, or the like may be added for thermal cross-linking.
In order to improve the dispersion stability of the slurry, a dispersant such as a resin-based surfactant, a cationic surfactant, or a nonionic surfactant having a surface active action or the like may be added to the electrode mixture. Further, a conventionally known binder such as styrene-butadiene rubber, cellulose, polyvinylidene fluoride (PVdF), or polytetrafluoroethylene (PTFE) may be used together.

The content of the binder for an electrochemical device according to the present disclosure blended in the electrode mixture is preferably 0.05 to 20% by weight, and more preferably 1 to 10% by weight of the electrode mixture.
A method of preparing an electrode mixture containing the binder for an electrochemical device is generally a method in which the electrode active material is dispersed and mixed into a solution or a dispersion obtained by dissolving or dispersing the binder in the dispersion medium. Then, the obtained electrode mixture is uniformly applied to a current collector such as a metal foil or a metal mesh, dried, and pressed as necessary to form a thin electrode mixture layer on the current collector to prepare a thin-film electrode.
In addition thereto, for example, after the binder and the electrode active material is mixed first, the dispersion medium may be added to make a mixture. In addition, after the binder and the electrode active material is heated and melted and extruded using an extruder to make a thin film mixture, the thin film mixture can also be bonded onto a current collector coated with a conductive adhesive or a general-purpose organic solvent to make an electrode sheet. Further, a solution or a dispersion of the binder may be applied to the electrode active material preformed in advance. As described above, the method of application as a binder is not particularly limited.

(Electrode)

The present disclosure is also an electrode comprising the binder for an electrochemical device according to the present disclosure described above.
The electrode preferably has a current collector and an electrode material layer formed on the current collector and composed of the electrode active material and the binder for an electrochemical device. The effects of the present disclosure can be obtained regardless of whether the binder for an electrochemical device according to the present disclosure is used for a positive electrode or a negative electrode, and thus the binder for an electrochemical device according to the present disclosure is not limited to either electrode.
In particular, the binder for an electrochemical device according to the present disclosure can follow the volume of the electrode active material during charge and discharge, and is preferably used for a high-capacity active material such as a Si-based negative electrode material.
Examples of the current collector (positive electrode current collector and negative electrode current collector) include a foil or a mesh of a metal such as iron, stainless steel, copper, aluminum, nickel, or titanium. Among these, aluminum foil or the like is preferable as the positive electrode current collector, and copper foil or the like is preferable as the negative electrode current collector.
The electrodes of the present disclosure can be produced, for example, by a method described above.

(Electrochemical device)

The present disclosure is also an electrochemical device comprising the electrode described above.
The electrochemical device is not particularly limited, and can be applied to a conventionally known electrochemical device. Specifical examples thereof include

a secondary battery such as a lithium ion battery, a primary battery such as a lithium battery, a sodium ion battery, a magnesium ion battery, a radical battery, a solar cell (particularly a dye-sensitized solar cell), and a fuel cell;
a capacitor such as a lithium ion capacitor, a hybrid capacitor, an electrochemical capacitor, or an electric double layer capacitor;
various condensers such as an aluminum electrolytic condenser or a tantalum electrolytic condenser; and an electrochromic element, an electrochemical switching element, and various electrochemical sensors.

Among these, the electrochemical device can also be preferably used for a secondary battery which has a high capacity and a large output and thus causes a large volume change due to the movement of a large amount of a metal ion.

(Secondary battery)

The present disclosure is also a secondary battery comprising the electrode of the present disclosure described above. In the secondary battery of the present disclosure, at least one of the positive electrode and the negative electrode may be the electrode of the present disclosure described above, and the negative electrode is preferably the electrode of the present disclosure as described above. The secondary battery is preferably a lithium ion battery.
The secondary battery of the present disclosure preferably further includes a non-aqueous electrolytic solution. The non-aqueous electrolyte solution is not limited, and as the organic solvent, one or two or more of a known hydrocarbon-based solvent such as propylene carbonate, ethylene carbonate, butylene carbonate, $\gamma$-butyl lactone, 1,2-dimethoxyethane, 1,2-diethoxyethane, dimethyl carbonate, diethyl carbonate, ethyl methyl carbonate, or ethyl propionate; and a

fluorine-based solvent such as fluoroethylene carbonate, fluoroether, fluorinated carbonate, or trifluoroethyl methyl carbonate can be used. Any conventionally known electrolyte can be used, and examples of the electrolyte that can be used include $LiClO_4$, $LiAsF_6$, $LiPF_6$, $LiBF_4$, LiCl, LiBr, $CH_3SO_3Li$, $CF_3SO_3Li$, $LiN(FSO_2)_2$, $LiN(CF_3SO_2)_2$, lithium bis(oxalato)borate, $LiPO_2F_2$, cesium carbonate.

In addition, a separator may be interposed between the positive electrode and the negative electrode. As the separator, a conventionally known separator may be used, or a separator using the binder for an electrochemical device according to the present disclosure described above for coating may be used.

Examples of the separator include conventionally known one, and specific examples thereof include a glass fiber separator that absorbs and retains an electrolytic solution, and a porous sheet or a non-woven fabric that is made of a polymer. The porous sheet is composed of, for example, a microporous polymer. Examples of the polymer composing such a porous sheet include a polyolefin such as polyethylene (PE) or polypropylene (PP); a laminate having a three-layer structure of PP/PE/PP, polyimide, and aramid. In particular, a polyolefin-based microporous separator and a glass fiber separator are preferable because they have the property of being chemically stable in an organic solvent and can suppress the reactivity with the electrolytic solution to a low level. The thickness of the separator composed of a porous sheet is not limited, and in the application of a secondary battery for driving a vehicle motor, the separator is preferably composed of a single layer or a multilayer having a total thickness of 4 to 60 μm. In addition, the separator composed of a porous sheet preferably has a fine pore size of at most 10 μm or less (usually about 10 to 100 nm) and a porosity of 20 to 80%.

Conventionally known nonwoven fabrics such as cotton, rayon, acetate, nylon (registered trademark), or polyester; a polyolefin such as PP or PE; polyimide, or aramid are used as the nonwoven fabric singly or by being mixed. The porosity of the nonwoven fabric separator is preferably 50 to 90%. Further, the thickness of the nonwoven fabric separator is preferably 5 to 200 μm, and particularly preferably 10 to 100 μm. If the thickness is less than 5 μm, retention of an electrolyte may worsen in some cases, and if the thickness exceeds 200 μm, the resistance may increase in some cases.

## Examples

Hereinafter, the present disclosure will be specifically described based on Examples. In the following Examples, unless otherwise specified, "parts" and "%" represent "parts by weight" and "% by weight," respectively.

### Synthesis Example 1 (synthesis of compound A)

A mixture was prepared by adding, to a reaction vessel, 21 mg (0.02 mmol) of 6-acrylamidomethyl-α-cyclodextrin, which is a polymerizable monomer having a host group, 3 mg (0.02 mmol) of n-butyl acrylate, which is a polymerizable monomer having a guest group, and pure water such that the solution concentration after the addition of acrylamide, which will be described later, was 2 mol/kg (mixing step). The polymerizable monomer having a host group accounts for 1 mol% of all the polymerizable monomers, and the polymerizable monomer having a guest group accounts for 1 mol%.

The mixture was heated to 80°C or more and stirred, then 141 mg (1.96 mmol) of acrylic acid, 4.6 mg (0.02 mmol) of ammonium persulfate, and 3.0 μL of 2-(dimethylamino)ethyl]dimethylamine were added, and polymerization was performed at room temperature for 1 hour to obtain a polymer material.

### Synthesis Example 2 (synthesis of compound B)

A polymer material was obtained in the same manner as in Example 1 except that the polymerizable monomer having a host group was 6-acrylamidomethyl-β-cyclodextrin and the polymerizable monomer having a guest group was t-butyl acrylate.

### Synthesis Example 3 (synthesis of compound C)

A polymer material was obtained in the same manner as in Example 1 except that the polymerizable monomer having a host group was 6-acrylamidomethyl-β-cyclodextrin and the polymerizable monomer having a guest group was N-(1-adamantyl)acrylamide.

### Synthesis Example 4 (synthesis of compound D)

A polymer material was obtained in the same manner as in Example 1 except that the polymerizable monomer having a host group was 6-acrylamidomethyl-γ-cyclodextrin and the polymerizable monomer having a guest group was

2-(perfluorohexyl)ethyl acrylate.

Synthesis Example 5 (synthesis of compound E)

A polymer material was obtained in the same manner as in Example 1 except that the polymerizable monomer having a host group was 6-acrylamidomethyl-γ-cyclodextrin, the polymerizable monomer having a guest group was 2-(perfluorohexyl)ethyl acrylate, which were each used in an amount of 0.01 mmol, and 1.98 mmol of acrylic acid were used.

Synthesis Example 6 (synthesis of compound F)

A polymer material was obtained in the same manner as in Example 1 except that the polymerizable monomer having a host group was 6-acrylamidomethyl-γ-cyclodextrin, the polymerizable monomer having a guest group was 2-(perfluorohexyl)ethyl acrylate, and acrylamide was used instead of acrylic acid.

Synthesis Example 7 (synthesis of compound G)

35 mg (0.02 mmol) of peracetyl-6-acrylamidomethyl-α-cyclodextrin, which is a polymerizable monomer having a host group, and 3 mg (0.02 mmol) of n-butyl acrylate, which is a polymerizable monomer having a guest group, 71 mg (0.98 mmol) of acrylic acid, and 98 mg (0.98 mmol) of ethyl acrylate were mixed, and the resulting mixture was heated to 80°C or more and stirred. Hereinafter, the total number of moles of acrylic acid and ethyl acrylate will be referred to as the number of moles of the main monomers, and the molar ratio thereof will be referred to as the ratio of the main monomers.

To this mixture, 4 mg (0.02 mmol) of the photoinitiator Irgacure 184 was added, and ultraviolet irradiation was performed using a high-pressure mercury lamp for 5 minutes to obtain a polymer material as a cured product.

Synthesis Example 8 (synthesis of compound H)

A polymer material was obtained in the same manner as in Example 7 except that the polymerizable monomer having a host group was peracetyl-6-acrylamidomethyl-β-cyclodextrin and the polymerizable monomer having a guest group was t-butyl acrylate.

Synthesis Example 9 (synthesis of compound I)

A polymer material was obtained in the same manner as in Example 7 except that the polymerizable monomer having a host group was peracetyl-6-acrylamidomethyl-β-cyclodextrin and the polymerizable monomer having a guest group was N-(1-adamantyl)acrylamide.

Synthesis Example 10 (synthesis of compound J)

A polymer material was obtained in the same manner as in Example 7 except that the polymerizable monomer having a host group was peracetyl-6-acrylamidomethyl-γ-cyclodextrin and the polymerizable monomer having a guest group was 2-(perfluorohexyl)ethyl acrylate.

Synthesis Example 11 (synthesis of compound K)

A polymer material was obtained in the same manner as in Example 7 except that the polymerizable monomer having a host group was 6-acrylamidomethyl-γ-cyclodextrin, the polymerizable monomer having a guest group was 2-(perfluorohexyl)ethyl acrylate, and acrylamide was used instead of acrylic acid.

Synthesis Example 12 (synthesis of compound L)

A polymer material was obtained in the same manner as in Example 7 except that the polymerizable monomer having a host group was 6-acrylamidomethyl-γ-cyclodextrin, the polymerizable monomer having a guest group was 2-(perfluorohexyl)ethyl acrylate, which were each used in an amount of 0.01 mmol, and the number of moles of the main monomers of acrylic acid and ethyl acrylate was 1.98 mmol.

Synthesis Example 13 (synthesis of compound M)

A polymer material was obtained in the same manner as in Example 7 except that the polymerizable monomer having a host group was 6-acrylamidomethyl-γ-cyclodextrin, the polymerizable monomer having a guest group was 2-(perfluorohexyl)ethyl acrylate, which were each used in an amount of 0.04 mmol, and the number of moles of the main monomers of acrylic acid and ethyl acrylate was 1.92 mmol.

Synthesis Example 14 (synthesis of compound N)

A polymer material was obtained in the same manner as in Example 7 except that the polymerizable monomer having a host group was 6-acrylamidomethyl-γ-cyclodextrin, the polymerizable monomer having a guest group was 2-(perfluorohexyl)ethyl acrylate, and the ratio of the main monomers was 20:80.

Synthesis Example 15 (synthesis of compound O)

A polymer material was obtained in the same manner as in Example 7 except that the polymerizable monomer having a host group was 6-acrylamidomethyl-y-cyclodextrin, the polymerizable monomer having a guest group was 2-(perfluorohexyl)ethyl acrylate, and the ratio of the main monomers was 40:60.

Synthesis Example 16 (synthesis of compound P)

A polymer material was obtained in the same manner as in Example 7 except that the polymerizable monomer having a host group was 6-acrylamidomethyl-γ-cyclodextrin, the polymerizable monomer having a guest group was 2-(perfluorohexyl)ethyl acrylate, and the ratio of the main monomers was 60:40.

Synthesis Example 17 (synthesis of compound Q)

A polymer material was obtained in the same manner as in Example 7 except that the polymerizable monomer having a host group was 6-acrylamidomethyl-γ-cyclodextrin, the polymerizable monomer having a guest group was 2-(perfluorohexyl)ethyl acrylate, and the ratio of the main monomers was 80:20.

(Compound R)

Commercially available polyacrylic acid (manufactured by Aldrich, viscosity average molecular weight of 450,000) was used as compound R.

(Compound S)

Commercially available polyrotaxane (manufactured by Advanced Soft Materials Inc., trade name: SeRM Super Polymer SH3400M (weight average molecular weight of 400,000)) was used as compound S. Polyrotaxane is a material that exhibits high stretchability by a cyclic molecule sliding on a linear polymer, wherein the linear polymer is polyethylene glycol, the cyclic molecule is polycaprolactone graft α-cyclodextrin, and the terminal group is adamantanamine.
Sodium carboxymethylcellulose (CMC2200 manufactured by Daicel FineChem Ltd.) was used as compound T.
In addition, styrene-butadiene rubber (TRD2001 manufactured by JSR Corporation) was used as compound U.
Synthesis Example 18 (Preparation of electrolytic solution)
Ethylene carbonate and fluoroethylene carbonate, which are high dielectric constant solvents, and ethyl methyl carbonate, which is a low viscosity solvent, were mixed in such a way as to have a volume ratio of 20/10/70, and $LiPF_6$ was added to the resulting mixture in such a way as to have a concentration of 1.0 mol/liter to obtain a non-aqueous electrolytic solution.

Examples 1 to 17 (Making lithium ion secondary battery)

[Making positive electrode]

93% by weight of $LiNi_{0.8}Co_{0.1}Mn_{0.1}O_2$ (NMC) as a positive electrode active material, 3% by weight of acetylene black as a conductive material, and 4% by weight of polyvinylidene fluoride (PVdF) as a binder were mixed in a N-methylpyrrolidone solvent to form a slurry. The obtained slurry was applied to one side of a 15 μm-thick aluminum foil coated with a conductive aid in advance, dried, and roll-pressed using a press, and the resulting foil was cut out into a

shape having an active material layer size having a width of 50 mm and a length of 30 mm and an unapplied portion having a width of 5 mm and a length of 9 mm to obtain a positive electrode.

[Making negative electrode]

Artificial graphite powder and SiO (average particle size of 5 μm) as negative electrode active materials, and the crushed predetermined polymers (Compounds A to Q) of the present disclosure were weighed in such a way as to have a solid ratio of 70/25/5 (weight% ratio), and further, these were dispersed in an aqueous solvent to provide a negative electrode mixture slurry. The obtained slurry was applied to one side of a 10 μm-thick copper foil, dried, and roll-pressed using a press, and the resulting foil was cut out into a shape having an active material layer size having a width of 52 mm and a length of 32 mm and an unapplied portion having a width of 5 mm and a length of 9 mm to obtain a negative electrode.

[Making aluminum laminated cell]

The positive electrode and the negative electrode were opposed to each other through a microporous polyethylene film (separator) having a thickness of 20 μm, and the non-aqueous electrolytic solution obtained above was injected; after the non-aqueous electrolytic solution sufficiently permeated into the separator or the like, the workpiece was sealed, precharged, and aged to make a lithium ion secondary battery.

Example 18

A lithium ion secondary battery was made in the same manner as in Example 1 except that the solid ratio of the artificial graphite powder, SiO (average particle size of 5 μm), compound D, and compound R was changed to 70/25/3/2 (weight% ratio).

Example 19

A lithium ion secondary battery was made in the same manner as in Example 1 except that the solid ratio of the artificial graphite powder, SiO (average particle size of 5 μm), compound D, and compound T using an aqueous dispersion of sodium carboxymethylcellulose at a concentration of 1% by weight was changed to 70/25/2/3 (weight% ratio).

Comparative Examples 1 and 2

A lithium ion secondary battery was made in the same manner as in Example 1 except that compounds R and S were used as polymers blended into the negative electrode.

Comparative Example 3

70 parts by weight and 25 parts by weight of artificial graphite powder and SiO, respectively, were added as negative electrode active materials; and 2 parts by weight, in terms of solid of sodium carboxymethylcellulose, of an aqueous dispersion of sodium carboxymethylcellulose (concentration of sodium carboxymethylcellulose of 1% by weight), which was compound T, used as a thickener, and 3 parts by weight, in terms of solid of styrene-butadiene rubber, of an aqueous dispersion of styrene-butadiene rubber (concentration of styrene-butadiene rubber of 50% by weight), which was compound U, used as a binder were added; and these were mixed using a disperser to form a slurry. This slurry was uniformly applied to one side of a copper foil having a thickness of 10 μm, dried, and then pressed to obtain a negative electrode.

A lithium ion secondary battery was prepared in the same manner as in Example 1 except that the negative electrode thus obtained was used.

(Measurement of battery characteristics)

[Cycle characteristic test]

The lithium ion secondary battery produced above, in the state of being sandwiched and pressurized between plates, was subjected to constant current-constant voltage charge (hereinafter, referred to as CC/CV charge) up to 4.3 V at a current corresponding to 1 C (0.1 C cut off) at 25°C, then the battery was discharged to 3 V at a constant current

of 1 C, and when this process was defined as one cycle, the initial discharge capacity was determined from the discharge capacity of the third cycle. The cycle was performed again, and the discharge capacity after 100 cycles was taken as the capacity after the cycle. The proportion of the discharge capacity after 100 cycles to the initial discharge capacity was determined, and this was taken as the cycle capacity retention (%).

$$\text{(Discharge capacity after 100 cycles) / (initial discharge capacity)} \times 100 = \text{capacity retention (\%)}$$

Results are shown in Table 1.

[Evaluation of IV resistance]

The battery for which the evaluation of the initial discharge capacity was complete was charged at 25°C at a constant current of 1 C to half the initial discharge capacity. This was discharged at 2.0 C, and the voltage after 10 seconds was measured. The resistance was calculated from the voltage drop during discharge and taken as the IV resistance.

Results are shown in Table 1.

[Amount of gas generated]

After the battery for which the high temperature cycle characteristic test was complete was sufficiently cooled, the volume was measured by the Archimedes method, and the amount of gas generated was determined from the change between the volume before and the volume after the high temperature cycle characteristic test.

Results are shown in Table 1.

[Table 1]

| | Example 1 | Example 2 | Example 3 | Example 4 | Example 5 | Example 6 | Example 7 | Example 8 | |
|---|---|---|---|---|---|---|---|---|---|
| Polymer component (% by weight in electrode mixture | Compound A (5) | Compound B (5) | Compound C (5) | Compound D (5) | Compound E (5) | Compound F (5) | Compound G (5) | Compound H (5) | |
| Capacity retention (%) | 57 | 47 | 55 | 58 | 51 | 46 | 64 | 63 | |
| IV resistance (mΩ) | 4020 | 4080 | 4050 | 4010 | 4040 | 4110 | 3980 | 3960 | |
| Amount of gas generated (ml) | 4.5 | 4.6 | 4.3 | 3.4 | 3.7 | 3.6 | 4.2 | 4.1 | |
| | Example 9 | Example 10 | Example 11 | Example 12 | Example 13 | Example 14 | Example 15 | Example 16 | Example 17 |
| Polymer component (% by weight in electrode mixture) | Compound I (5) | Compound J (5) | Compound K (5) | Compound L (5) | Compound M (5) | Compound N (5) | Compound O (5) | Compound P (5) | Compound Q (5) |
| Capacity retention (%) | 73 | 77 | 48 | 75 | 70 | 65 | 60 | 80 | 83 |
| IV resistance (mΩ) | 3900 | 3860 | 3950 | 3880 | 3930 | 3940 | 3950 | 3840 | 3800 |
| Amount of gas generated (ml) | 4.1 | 3.2 | 3.7 | 3.3 | 3.4 | 3.5 | 3.6 | 3.1 | 3.1 |
| | Example 18 | Example 19 | Comparative Example 1 | Comparative Example 2 | Comparative Example 3 | | | | |
| Polymer component (% by weight in electrode mixture) | Compound D (3) Compound R(2) | Compound D (2) Compound T(3) | Compound R (5) | Compound S (5) | Compound T (2) Compound U(3) | | | | |
| Capacity retention (%) | 46 | 44 | 38 | 36 | 33 | | | | |
| IV resistance (mΩ) | 4020 | 3980 | 4320 | 4150 | 4140 | | | | |
| Amount of gas generated (ml) | 4.1 | 4.6 | 4.9 | 5.1 | 5.2 | | | | |

From the results in Table 1, it became clear that the lithium ion batteries of the Examples using the binder of the present disclosure exhibit excellent life characteristics because the discharge capacity retention after the cycle characteristic test is high. In addition, the IV resistance values of the Examples were smaller than those of the Comparative Examples, and it was shown that the lithium ion batteries of the Examples have a good discharged capacity. Further, the lithium ion batteries of the Examples had a small amount of gas generated, and thus it was shown that the volume change is small even after repeated charge and discharge.

Industrial Applicability

Use of the binder for an electrochemical device according to the present disclosure can improve the life characteristics of electrochemical devices, and particularly high-power secondary batteries, that can be used as various power sources such as a portable power source and an automobile power source.

## Claims

**1.** A binder for an electrochemical device, comprising a polymer material including:

a first polymer containing a first constituent unit having a guest group in a side chain; and
a second polymer containing a second constituent unit having a host group in a side chain.

**2.** The binder for an electrochemical device according to claim 1, wherein at least one of the first polymer and the second polymer has one or more fluorine groups.

**3.** A binder for an electrochemical device, comprising a polymer material including a third polymer containing:

a first constituent unit having a guest group in a side chain;
a second constituent unit having a host group in a side chain; and
a third constituent unit other than the first constituent unit and the second constituent unit.

**4.** The binder for an electrochemical device according to claim 3, wherein at least one constituent unit of the first constituent unit, the second constituent unit, and the third constituent unit has one or more fluorine groups.

**5.** The binder for an electrochemical device according to any one of claims 1 to 4, wherein the guest group is a hydrocarbon group.

**6.** The binder for an electrochemical device according to any one of claims 1 to 5, wherein the number of carbon atoms of the guest group is 40 or less.

**7.** The binder for an electrochemical device according to claim 6, wherein the number of carbon atoms of the guest group is 3 to 20.

**8.** The binder for an electrochemical device according to any one of claims 1 to 7, wherein the guest group has one or more fluorine groups.

**9.** The binder for an electrochemical device according to any one of claims 1 to 8, wherein the first constituent unit includes a structure represented by the following formula (1a):

[Formula 1]

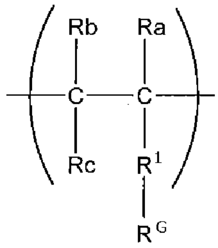

(1a)

wherein

Ra represents a hydrogen atom, a methyl group, or a fluorine group;
Rb represents a hydrogen atom or a fluorine group;
Rc represents a hydrogen atom or a fluorine group;
$R^1$ represents a divalent group formed by removing one hydrogen atom from a monovalent group selected from the group consisting of a hydroxy group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, a phenyl group optionally having one or more substituents, an aldehyde group, and a carboxy group, and/or a group represented by $-O-(CH_2-CH_2-O)n-$ (n is 1 to 20); and
$R^G$ represents a guest group, and/or
a structure represented by the following formula (1'a):

[Formula 2]

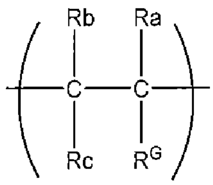

(1'a)

wherein
Ra, Rb, Rc, and $R^G$ are as defined in the formula (1a).

**10.** The binder for an electrochemical device according to any one of claims 1 to 9, wherein the host group is a cyclodextrin or a derivative thereof.

**11.** The binder for an electrochemical device according to any one of claims 1 to 10, wherein the host group is a group in which a methylene group is bonded to an oxygen atom derived from a hydroxyl group of a cyclodextrin or a derivative thereof, and
the methylene group is further bonded to a main chain or a side chain of the second constituent unit.

**12.** The binder for an electrochemical device according to any one of claims 1 to 11, wherein a total number of fluorine groups contained in the first constituent unit and the second constituent unit is 4 or more.

**13.** An electrode mixture comprising the binder for an electrochemical device according to any one of claims 1 to 12, an electrode active material, and a dispersion medium.

**14.** An electrode comprising the binder for an electrochemical device according to any one of claims 1 to 12, an electrode active material, and a current collector.

**15.** The electrode according to claim 14, wherein the electrode is a positive electrode.

**16.** The electrode according to claim 14, wherein the electrode is a negative electrode.

**17.** The electrode according to claim 14, wherein the electrode active material contains a carbonaceous material in at

least a part thereof.

**18.** The electrode according to claim 14, wherein the electrode active material contains a silicon-containing compound in at least a part thereof.

**19.** An electrochemical device comprising the electrode according to any one of claims 14 to 18.

**20.** A secondary battery comprising the electrode according to any one of claims 14 to 18.

**21.** The secondary battery according to claim 20, wherein the secondary battery is a lithium ion battery.

## INTERNATIONAL SEARCH REPORT

International application No.
PCT/JP2020/009216

A. CLASSIFICATION OF SUBJECT MATTER
H01M 4/13(2010.01)i; H01M 4/133(2010.01)i; H01M 4/134(2010.01)i; H01M 4/62(2006.01)i; H01G 11/38(2013.01)i
FI: H01M4/62 Z; H01M4/13; H01M4/133; H01M4/134; H01G11/38
According to International Patent Classification (IPC) or to both national classification and IPC

B. FIELDS SEARCHED

Minimum documentation searched (classification system followed by classification symbols)
H01M4/13; H01M4/133; H01M4/134; H01M4/62; H01G11/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JST7580 (JDreamIII)

C. DOCUMENTS CONSIDERED TO BE RELEVANT

| Category* | Citation of document, with indication, where appropriate, of the relevant passages | Relevant to claim No. |
|---|---|---|
| P, A | JP 2019-204719 A (TOYOTA INDUSTRIES CORPORATION) 28.11.2019 (2019-11-28) | 1-21 |
| A | JP 2017-45517 A (TOPPAN PRINTING CO., LTD.) 02.03.2017 (2017-03-02) | 1-21 |
| A | WO 2018/038186 A1 (DAIKIN INDUSTRIES, LTD.) 01.03.2018 (2018-03-01) | 1-21 |

☐ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 May 2020 (26.05.2020) | 02 June 2020 (02.06.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/009216

| Patent Documents referred in the Report | Publication Date | Patent Family | Publication Date |
|---|---|---|---|
| JP 2019-204719 A | 28 Nov. 2019 | (Family: none) | |
| JP 2017-45517 A | 02 Mar. 2017 | (Family: none) | |
| WO 2018/038186 A1 | 01 Mar. 2018 | US 2019/0177455 A1<br>EP 3505572 A1<br>CN 109642085 A<br>KR 10-2019-0036565 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014065407 A
- JP 2009080971 A
- WO 2018038186 A
- WO 2013162019 A
- WO 2012036069 A